# EUROPEAN PATENT SPECIFICATION

(11) **EP 1 677 444 B1**
(45) Date of publication and mention of the grant of the patent: **10.03.2010**
(21) Application number: 05290012.3
(22) Date of filing: 04.01.2005
(51) Int. Cl.: H04B 10/18

(54) **Advanced dispersion map for transmission system with dispersion shifted fibres**
Fortgeschrittene Dispersionsabbildung für ein Übertragungssystem mit dispersionsverschobenen Fasern
Diagramme de dispersion avancé pour un système de transmission à fibres de dispersion décalée

(43) Date of publication of application: 05.07.2006
(73) Proprietor: Alcatel Lucent, 75008 Paris (FR)
(72) Inventor: Charlet, Gabriel, 91190 Villiers-le-Bacle (FR); Antona, Jean-Christophe, 75014 Paris (FR)
(74) Representative: Schmidt, Werner Karl

(56) References cited:
- US-B1- 6 188 823
- US-B1- 6 366 728
- BERTAINA A ET AL: "IMPACT OF THE FIBER INFRASTRUCTURE ON WDM TRANSMISSION" ALCATEL TELECOMMUNICATIONS REVIEW, ALCATEL, PARIS CEDEX, FR, September 2003 (2003-09), XP007005280 ISSN: 1267-7167

## Description

### Technical Field

The present invention relates to a system architecture for long haul transmission of optical signals.

### Background of the Invention

Nonlinear optical effects such as four-wave mixing (FWM) and Cross-Phase Modulation (XPM) can degrade the optical signal transmission through long-haul optical networks. Increasing the dispersion in the fibers decreases both FWM and XPM. Indeed, accumulated dispersion itself causes broadening in transmitted optical pulses since it implies different group velocities for optical pulses at different wavelengths. In fact, the relative group velocity of pulses at different wavelengths will be high therefore diminishing the interaction time between such pulses with different wavelengths. A specific pulse will just see an averaged effect, the average power of other channels, that will result in a constant phase shift through XPM which implies no penalty at all. Dispersion units are typically given as picoseconds/nanometer-kilometer (ps/nm·km), where the kilometer units correspond to the length of the fiber. The dispersion product of a span of fiber is a measure of the dispersion accumulated over the span.

Some dispersion is even supported due to the requirement to reduce non-linear effects such as FWM and XPM. But to keep the overall dispersion in tolerable limit, it is therefore necessary to compensate regularly the accumulated dispersion in these long-haul systems. In long-haul repeatered transmission systems using optical fibers, the interplay of the accumulation of large amounts of the chromatic dispersion and self-phase modulation (SPM), creates noise and distortion in the optical system. Indeed, conversely to FWM and XPM the non-linear effect SPM tends to increase with increasing dispersion. Dispersion maps, i.e. the dispersion as a function of the transmission distance, attempt to minimize the effects of chromatic dispersion.

Current submarine transmission systems generally have span lengths in the 45 - 50 km range and use a dispersion map which provides an average dispersion at a wavelength of 1560 nm of around -2ps/nm-km in the approximately 90% of the transmission spans. The negative dispersion fibers used in those spans may be single fiber types or combinations of two fibers, in which case the fiber following the amplifier has a larger effective area to reduce nonlinear effects and the second fiber has a lower dispersion slope. The dispersion slope of a fiber is the change in the dispersion per unit wavelength. After approximately 10 spans, the accumulated negative dispersion is then compensated at a given wavelength by an additional span of single mode fiber (SMF).

The combination of spans of different kind of fibers is performed according to the elected dispersion map. In the literature can be found different kinds of strategy when defining a dispersion map. For example, in US 6,317,238 is described a method and an apparatus optimized for dispersion mapping that yields improved transmission performance for optical transmission systems. In particular, the chromatic dispersion is arranged on both a short and a long length scale so that the average dispersion returns to zero. In US 6,580,861 is described an optical transmission system including a series of consecutive blocks of optical fiber. Each block of the system includes a first, second and third series of spans of optical fiber, where the second series of the spans compensates for accumulated dispersion in the first and third series in the wavelength range of transmission. In such a system, the accumulated dispersion at a wavelength between the used channels is brought back to zero after each block.

In the article "Impact of the Fiber Infrastructure on WDM Transmission" from Bertaina at al., published in Alcatel Telecommunications Review September 2003 is discussed physical effects in fiber when total throughput of WDM transmission systems is enlarged. Indeed, the physical effects that affect optical signal transmission depend largely on the characteristics of the fiber itself: attenuation, group velocity dispersion, polarization mode dispersion and the degree of nonlinearity. In this article is discussed some dispersion management offering in particular some efficient means of a grading systems based on single mode fiber SMF while being also needed over non-zero dispersion shifted fibers (NZ-DSF). There is concluded that in all cases, high capacity systems cannot be designed without a precise understanding of the physical characteristics of the fiber that will be connected.

In WO 02/056069 is described a method and apparatus for optimizing the dispersion and dispersion slope for a dispersion map with slope-compensating optical fibers. Such apparatus comprises an optical sublink including operationally coupled optical fiber segments. The optical fiber segments are from a first optical fiber type, a second optical fiber type and a third optical fiber type. The first optical fiber type has a positive dispersion and a positive dispersion slope. The second optical fiber type has a negative dispersion and a negative dispersion slope. The third optical fiber type has one from the group of a positive dispersion and a negative dispersion slope, and a negative dispersion and a positive dispersion slope. In such a way it is expected to optimize the dispersion compensation without implying too high cross-phase modulation. But, beside the fact that it is not possible to have a conventional fiber with positive dispersion and negative dispersion slope, such solution is not so adequate for long-haul transmission system comprising low dispersion fiber such as dispersion shifted fibers DSF and first generation non-return to zero.dispersion shifted fibers NZ-DSF.

### Summary of the Invention

In view of the above, it is an object of the present invention to provide a method for processing optical signals to be transmitted through a succession of transmission lines spans made out of DSF and a system architecture allowing the implementation of such a method for compensating dispersion occurring at the transmission path without suffering too much from any cross-phase modulation or four-wave mixing.

This object is achieved in accordance with the invention by the use of a system architecture comprising a succession of transmission lines spans made out of dispersion shifted fibers DSF with at the interstage of an amplifier alternately single mode fiber SMF or Dispersion Compensating fiber DCF. Advantageously, the DCF is chosen such to compensate the dispersion and the dispersion slope of the previous SMF and the DSF. In such a way, it is possible to limit the impact of the XPM by not compensating the dispersion and possibly the dispersion slope at each span.

Advantageous developments of the invention are described in the dependent claims, the following description and the drawings.

### Description of the drawings

An exemplary embodiment of the invention will now be explained further with the reference to the attached drawings in which:
- Fig. 1a, 1b: show a system architecture and the corresponding chromatic dispersion in dependence on the distance as known from prior art;
- Fig. 2a, 2b: show a system architecture and the corresponding chromatic dispersion in dependence on the distance according to the present invention;
- Fig. 3: shows a comparison of the penalty for the worst channel between the system architecture according to the prior art (squares) and according to the present invention (triangles).

### Detailed description of preferred embodiments

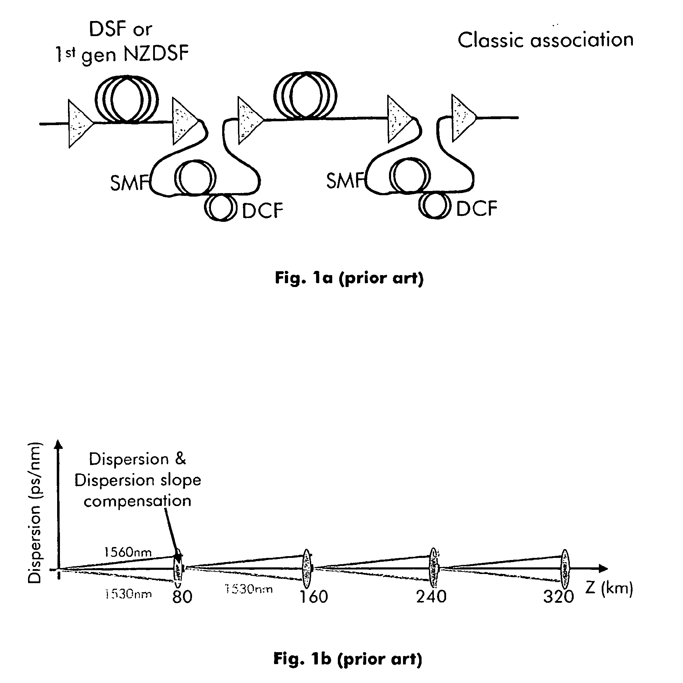

On figure 1a is shown a system architecture as known from the prior art. Between each fiber span made out of a dispersion shifted fiber DSF or first generation non-zero dispersion shifted fibers NZ-DSF is placed a stage made out of a single mode fiber SMF and a dispersion compensating fiber DCF. The different triangles depict the amplifiers. On figure 1b is shown the corresponding chromatic dispersion for such system architecture in dependence on the distance for optical signals at two different wavelengths, namely 1560 nm and 1530 nm. The used dispersion map is so that after each fiber span of DSF the chromatic dispersion is almost completely compensated. SMF is added in order to have the possibility to compensate the dispersion slope of DSF with the DCF.

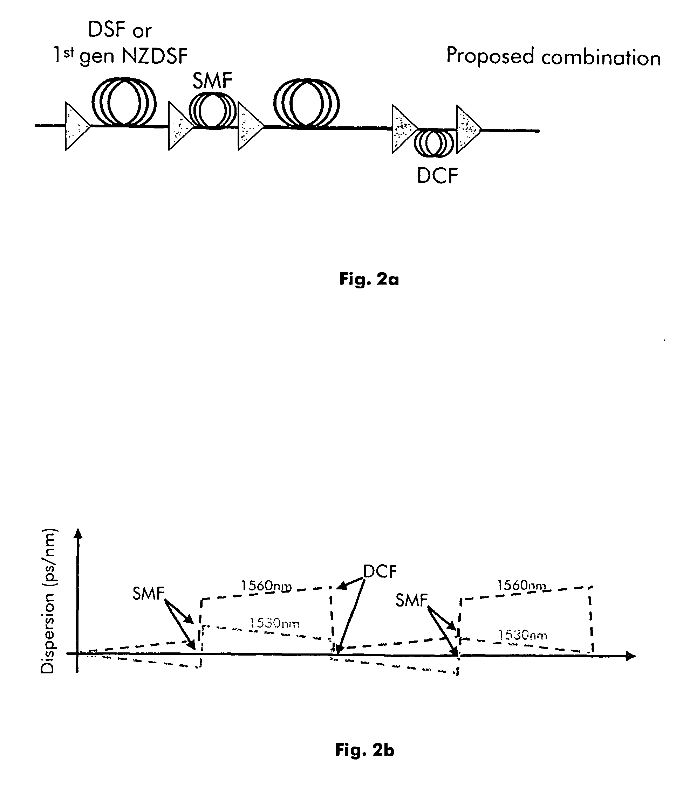

On figure 2a is shown a system architecture according to the invention. It is based on the choice not to compensate completely the dispersion and possibly also the dispersion slope after each span of DSF or first generation NZ-DSF. This is achieved with the architecture as shown on figure 2a with in-between each fiber span made out of a DSF or first generation NZ-DSF is placed alternating a SMF or a DCF. As on figure 1a, the triangles depict the usually used amplifiers. On figure 2b is shown the corresponding chromatic dispersion in dependence on the distance (km) for optical signals at two different wavelengths, namely at 1530 nm and 1560 nm. It is now obvious from such chromatic dispersion that the dispersion is not compensated after each span of DSF. This explains that for example for optical signals at wavelength 1560 nm the dispersion can reach quite high values before being compensated in the present case after two spans of DSF using a DCF. The chromatic dispersion property for optical signals at 1530 nm is a little bit different. But as for optical signals at wavelength 1560 nm the accumulated dispersion is also compensated only after two spans of DSF.

It is conceivable to dispatch the SMF and DCM over e.g. four spans or more (two spans with SMF spools and two spans with DCM).

In order to compensate 80km of DSF, the association of 19km of SMF and of a module designed to compensate 80km of LEAF is required. In order to compensate 80km of NZDSF (D=2ps/nm.km-1 @1550nm and D'=0.07ps/nm.km-2), 7km of SMF and a Dispersion Compensating Module (DCM)designed to compensate 70km of LEAF are required. The insertion loss of this association is compatible with the interstage of an EDFA (5dB of insertion loss for the DCM module and less for the SMF). Instead of using the SMF spool and the DCM in the same amplifier, the proposition is to split them into 2 amplifiers as shown in Fig. 2b.

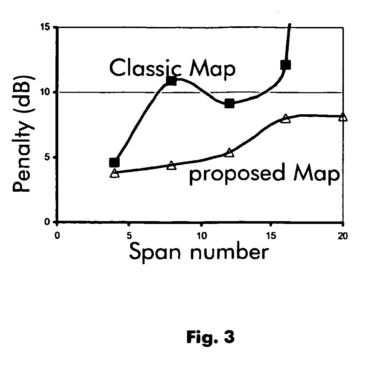

Numerical simulations have been launched to evaluate the transmission performance of Nx1 OGbit/s WDM signal with 100GHz spacing at a channel power of -5dBm for both Dispersion Map. Fig 3 depict the penalty (in dB) of the worst channel plot in function of the number of 80km span of DSF of the transmission. It appears that the proposed dispersion Map gives always better result than the classical Map with dispersion compensation at each span.

In the case of a network with Optical Add-Drop Multiplexer, it can be more practical to have a residual dispersion near 0 at each node (even if it is a sub-optimal solution). A new constraint is added and the place of OADM has to be taken into account to keep the residual dispersion near 0ps/nm at these points of the network. This can be done by using the "classic Map" for one span when a odd number of span separates two OADMs or by using larger amount of SMF in one interstage and lower amount DCF but for two spans.

## Claims

1. A system architecture for long haul transmission of optical signals comprising a succession of transmission lines spans made out of dispersion shifted fibers DSF with in-between a stage made alternately by either a single mode fiber SMF or a dispersion compensating fiber DCF while the DCF is chosen such to compensate the dispersion and the dispersion slope of the previous SMF and of the DSF.

2. The system architecture according to claim 1 **characterized in that** the transmission lines spans are first generation non-zero dispersion shifted fibers NZ-DSF.

## Patentansprüche

1. Eine Systemarchitektur für die Langstreckenübertragung von optischen Signalen, umfassend eine Folge von Übertragungsleitungsteilstrecken aus dispersionsverschobenen Fasern DSF und einem jeweils dazwischenliegenden Abschnitt aus abwechselnd entweder einer Singlemode-Faser SMF oder einer Faser zur Kompensation der Dispersion DCF, wobei die DCF derart gewählt wird, dass die Dispersion und der Dispersionsanstieg der vorangehenden SMF und der DSF kompensiert wird.

2. Die Systemarchitektur nach Anspruch 1, **dadurch gekennzeichnet, dass** die Übertragungsleitungsteilstrecken Nicht-Null-dispersionsverschobene Fasern NZ-DSF der ersten Generation sind.

## Revendications

1. Architecture de système pour une transmission à grande distance de signaux optiques comprenant une succession de tronçons de lignes de transmission constitués de fibres à dispersion décalée DSF avec entre celles-ci un étage constitué alternativement d'une fibre monomodale SMF ou d'une fibre de compensation de dispersion DCF bien que la DCF soit choisie afin de compenser la dispersion et la pente de dispersion de la SMF précédente et des DSF.

2. Architecture de système selon la revendication 1 **caractérisée en ce que** les tronçons de lignes de transmission sont des fibres à dispersion décalée non-nulle de première génération NZ-DSF.
